# EUROPEAN PATENT APPLICATION

(11) **EP 0 940 437 A1**
(43) Date of publication of application: **08.09.1999**
(21) Application number: 97943139.2
(22) Date of filing: 02.10.1997
(51) Int. Cl.: C08L 25/06, C08K 7/04

(54) **STYRENIC RESIN COMPOSITION AND MOLDINGS PRODUCED THEREFROM**

(30) Priority: 19.09.1997 JP 25501797
(71) Applicant: DAICEL CHEMICAL INDUSTRIES, LTD., Osaka-fu 590 (JP)
(72) Inventor: TADA, Heihachiro, Sakai-shi, Osaka 590 (JP); YUKAWA, Takao, Himeji-shi, Hyogo 671-11 (JP); ITAKURA, Masahiko, Kawachinagano-shi, Osaka 586 (JP)
(74) Representative: Grünecker, Kinkeldey, Stockmair & Schwanhäusser Anwaltssozietät
(86) International application number: JP9703527
(87) International publication number: WO9915588

(57) **Abstract**

Styrene-based resin compositions excellent in transparency, moldability, service strength and cost performance, which are styrene-based resin compositions or styrene resin compositions containing 100 parts by weight of styrene resins and from 0.001 to 4 parts by weight of fibrous materials.

## Description

### Technical Field

This invention relates to styrene-based resin compositions excellent in transparency, moldability, service strength and cost performance.

### Background Art

As styrene-based resins, in particular, styrene polymers (polystyrenes) are excellent in transparency and moldability and less expensive, they have been widely employed in the fields of food containers, weak-current electric appliances, etc. However, there is a problem that polystyrenes are inferior in service strength to other transparent resins such as styrene/acrylonitrile copolymers and styrene/methyl methacrylate copolymers. In the case of molded articles of deep box type, in particular, there often arises a problem of cracking of the molded articles at the stage of mold release in injection molding.

Common methods for improving the service strength of polystyrenes comprise elevating the molecular weight of the polymers. Since, however, the fluidity is worsened with an increase in the molecular weight, it has been a practice to add plasticizers such as mineral oil to the polymers in order to improve the fluidity. Although the fluidity is improved by adding plasticizers, the heat resistance of the polymers are deteriorated thereby. When the balance among service strength, moldability and heat resistance is taken into consideration, therefore, the existing polystyrenes are not fully satisfactory.

### Disclosure of the Invention

It is an object of the present invention to provide styrene-based resin compositions having a good balance among service strength, moldability and heat resistance. In particular, the present invention aims at providing styrene-based resin compositions which are excellent in surface impact properties and makes it possible to give thin-walled and light-weight molded articles while maintaining the transparency and fluidity in molding each on the satisfactory level.

The present inventors have conducted intensive studies to solve the above-mentioned problems and consequently completed the present invention.

Accordingly, the present invention relates to a styrene-based resin composition wherein from 0.001 to 4 parts by weight of a fibrous material is blended with 100 parts by weight of a styrene-based resin or a styrene resin.

The fibrous material to be used in the present invention includes whiskers, amorphous fibers and crystalline fibers. Preferable examples of the fibrous material to be used in the present invention are those having a fiber diameter of from 0.05 to 15 µm, a fiber length of from 2 to 100 µm and an aspect ratio of at least 5. It is particularly preferable to use whiskers therefor. The fiber diameter and the fiber length of the fibrous material can be determined by dispersing the fibrous material in an alcohol such as methanol and then observing it under a transmission electron microscope. Alternatively, these factors may be determined by burning a molded article and then observing the scanning electron photomicrograph of the remaining whiskers.

In general, whiskers have a high strength and a high modulus of elasticity. When whiskers are added to resins, therefore, the strength and modulus of elasticity of the obtained compositions are considerably elevated. Thus, whiskers have been employed as fillers for resins.

The present inventors have found out that when such a fibrous material is added in a small amount, i.e., from 0.001 to 4 parts by weight, to 100 parts by weight of a styrene-based resin, the surface impact properties of a thin-walled molded article can be remarkably improved without deteriorating its transparency or moldability.

Examples of the whiskers usable in the present invention include mixtures of whiskers of at least one material selected from among aluminum borate, silicon carbide, silicon nitride, potassium titanate, zinc oxide, basic magnesium sulfate, magnesia, magnesium borate, titanium diboride, graphite (C), calcium sulfate, α-alumina, chrysotile, wollastonite, calcium carbonate, calcium silicate and titanium oxide. Among all, aluminum borate whiskers are particularly excellent as a reinforcement for resins because of the high modulus of elasticity compared with other whiskers. Fundamental description on aluminum borate whiskers is given in JP-B 6-4765. These aluminum borate whiskers are preferably employed in an amount of from 5 to 100 parts by weight per 100 parts by weight of the base resin. However, polystyrenes are frequently processed into thin-walled molded articles such as cases, containers and sheets. In these cases, the surface impact properties including those determined by the falling ball test and Du Pont impact test rather than the strength and modulus of elasticity are regarded as the service strength. The present inventors have found out that the effect of improving the surface impact properties of styrene-based resins without deteriorating the transparency can be sufficiently established by using only a small amount of whiskers.

Accordingly, one preferred embodiment of the present invention is a polystyrene composition wherein from 0.001 to 4 parts by weight of aluminum borate whiskers are added to 100 parts by weight of a styrene-based resin, in particular, polystyrene.

A preferable styrene-based resin to be used in the present invention is polystyrene, and use can be made of generally processed polystyrene (GPPS) having a weight-average molecular weight of from 100,000 to 500,000, preferably from 200,000 to 500,000, and still preferably from 200,000 to 400,000.

Examples of the styrene compounds serving as the monomer constituting these styrene-based resins include styrene, α-substituted styrenes such as α-methylstyrene, and nucleus-substituted alkylstyrenes such as p-methylstyrene. Together with these styrene compounds, use may be made of compounds copolymerizable therewith, so long as the object of the present invention is not deteriorated thereby.

Aluminum borate whiskers to be employed suitably as the fibrous material in the present invention are marketed products which are represented by the compositional formula 2Al203·B203 or 9Al203·2B203 and have a fiber diameter of from 0.05 to 5 µm, preferably from 0.5 to 1.0 µm, a fiber length of from 2 to 100 µm, preferably from 20 to 30 µm, and an aspect ratio of at least 5, preferably at least 10 and usually not more than 60.

Examples of the aluminum borate whiskers to be used preferably also include those which have been surface-treated with well-known coupling agents such as ones based on silicone, titanium, aluminum, zirconium, zircoaluminum, chromium, boron, phosphorus and amino acids.

The aluminum borate whiskers are employed in an amount of from 0.001 to 4 parts by weight per 100 parts by weight of the polystyrene. When the content of the aluminum borate whiskers is less than 0.001 part by weight, the service strength cannot be improved. When the content thereof exceeds 4 parts by weight, on the other hand, the transparency of the molded articles is deteriorated. It is preferable that the content of the aluminum borate whiskers ranges from 0.01 to 1 part by weight.

By using the styrene-based resin compositions of the present invention, it is possible to easily obtain injection-molded articles, extrusion-molded articles and post-formed molded articles obtained therefrom, such as stretched sheets and containers of the extrusion-molded articles each having an excellent transparency. The injection-molded articles and extrusion-molded articles may be obtained by any well-known methods without restriction. For example, injection-molded articles made from the styrene-based resin compositions of the present invention can be obtained by adding, if necessary, various additives to the above-mentioned styrene-based resin compositions followed by molding by the conventional injection molding methods. In this case, the injection molding temperature, the injection molding pressure, and the screw rotary speed are respectively regulated to from 180 to 280°C, from 30 to 140 kg/cm2·G, and from 50 to 800 rpm.

When the styrene-based resin compositions of the present invention are to be extrusion-molded into sheets, the molding is preferably effected under the following conditions. Any of single-screw extruders and twin-screw ones is usable therefor without causing any problem. It is, however, preferable to use extruders having the ratio of the length to the diameter of the screw (L/D) of from 25 to 35. The resin temperature preferably falls within a range of from 180 to 250°C where the styrene-based resin can be extruded through a T-die. The T-die may be replaced by a coathanger die, a fishtail die or a straight-manifold die. To smoothen the surfaces of the molded articles, it is necessary to use a cast roll or a touch roll having a specular surface. It is therefore preferable to use rolls metallized by, for example, chromium. The surface temperature of the cast roll or the touch roll is preferably maintained at from 40 to 100°C, still preferably from 50 to 80°C. The take-off speed of the sheets may be appropriately selected within the range of from 10 to 30 m/min so as to achieve a good productivity depending on the sheet width and the performance of the extruder. It is also possible that these sheets are further biaxially stretched by the tenter method, inflation method, roll method, etc. so as to give thinner sheets or films. The draw ratio ranges from 1.5- to 10-fold, preferably from 2- to 5-fold, respectively, in the lengthwise and crosswise directions. The biaxial stretching is preferably effected in such a manner as to give the orientation release stress of from 3 to 10 kg/cm2 as determined in accordance with ASTM D1504NI.

The surfaces of the biaxially stretched sheets may be coated with silicone oils (for example, dimethylpolysiloxane having an Ostwald viscosity at 20°C of from 100 to 200,000 St), coating agents such as emulsions containing silicone oils and emulsifiers, or coating agents containing antifogging agents or antistatic agents. These coating agents are used in such an amount as to give no stickiness to fingers, for example, from 10 to 150 mg/m².

The above-mentioned sheets or films may be further formed into containers by conventional methods such as vacuum forming or hot plate forming. To produce containers of 0.1 to 2 mm in thickness, for example, the forming may be effected by heating the sheets or films to a forming temperature of from 100 to 180°C, preferably from 110 to 150°C for from 2 to 25 seconds, preferably

from 5 to 15 seconds. The polystyrene composition of the present invention may be produced also by adding the fibrous material in the polymerization step of the polystyrene or melt kneading with the use of an extruder, etc. Alternatively, it will suffice merely when the fibrous material such as aluminum borate whiskers is dry blended with the polystyrene such as base GPPS pellets.

If necessary, the styrene-based resin composition of the present invention may further contain additives, for example, stabilizers resistant to heat, light and oxygen, such as antioxidants such as phenol compounds and phosphorus compounds, UV absorbers such as benzotriazole compounds, benzophenone compounds and phenyl salicylate compounds, hindered amine stabilizers, lubricants and mold-releasing agents such as liquid paraffin, ethylenebisstearamide and metal soaps (zinc stearate, magnesium stearate, calcium stearate, etc.), antistatic agents, and colorants.

According to the present invention, a small amount of a fibrous material is added to a styrene-based resin to thereby improve the service strength including the surface impact properties of thin-walled molded articles without deteriorating the transparency and moldability of the styrene-based resin. In particular, aluminum borate whiskers, which have a high strength, a high modulus of elasticity, and a refractive index close to that of polystyrene, can elevate the service strength without deteriorating the transparency.

To further illustrate the present invention in greater detail, and not by way of limitation, the following Examples will be given.

### Examples 1 to 6

Base GPPS pellets were dry blended with aluminum borate whiskers "ALBOREX® Y" (mfd. by Shikoku Chemicals Corporation, fiber diameter: 0.5 to 1.0 µm, fiber length: 10 to 30 µm, aspect ratio: about 10 to 60). The obtained blend was injection-molded at a molding temperature of 220°C to thereby give flat plates and flexural test pieces (12 cm × 12 cm × 3 mm). The flat plates were subjected to the measurement of the haze value and the Du Pont impact test, while the flexural test pieces were subjected to the measurement of the Vicat softening point.

The haze was measured by using NDH-300A (mfd. by Nippon Denshoku Kogyo K.K.) in accordance with ASTM D1003. In the measurement of the Du Pont impact strength, use was made of a load of 0.0456 kgf [falling weight tip (R): 12.5 mm] and the impact strength was determined from the 50% breaking height at a punch diameter of 12.5 mm. The Vicat softening point was measured under a load of 1 kgf in accordance with ASTM D1525.

Table 1 summarizes the results.

### Comparative Examples 1 to 5

In Comparative Examples 1 and 2, the above test was carried out without adding any whisker by using base GPPSs differing from each other in molecular weight. In Comparative Examples 3 and 4, the same test was performed by using aluminum borate whiskers in amounts outside the range as specified in the present invention. In Comparative Example 5, the same test was performed by using a GPPS having a high molecular weight and containing 3.5% of liquid paraffin to enable fabrication.

Table 1 summarizes the results.

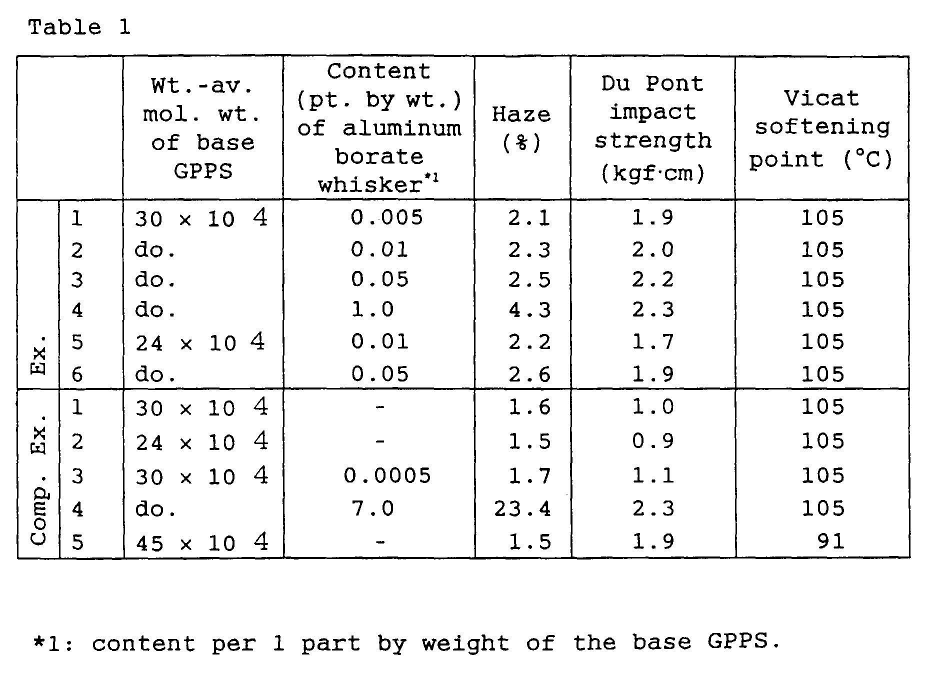

### Examples 7 to 9 and Comparative Examples 6 and 7: Extrusion-molded articles

Base GPPS pellets were dry blended with aluminum borate whiskers "ALBOREX® Y" (mfd. by Shikoku Chemicals Corporation, fiber diameter: 0.5 to 1.0 µm, fiber length: 10 to 30 µm, aspect ratio: about 10 to 60). The obtained blend was extrusion-molded by using an extruder (mfd. by Plant Giken K.K., 30 m/m small-sized multi-layer extruder) from a T-die at a cylinder temperature of 190 to 210°C and at a take-off speed of 0.6 m/min to thereby give sheets of 1.56 mm in thickness. These sheets were subjected to the measurement of the haze value, the Du Pont impact strength and the Vicat softening point each in the same manner as the one described above by using a load of 0.025 kgf in the determination of the Du Pont impact strength.

Table 2 summarizes the results.

**Table 2**

| | | Wt.-av. mol. wt. of base GPPS | Content (pt. by wt.) of aluminum borate whisker^{*1} | Haze (%) | Du Pont impact strength (kgf·cm) | Vicat softening point (°C) |
|---|---|---|---|---|---|---|
| Ex. | 7 | 30 × 10 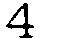 | 0.03 | 1.4 | 0.36 | 105 |
| | 8 | 24 × 10 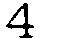 | do. | 1.4 | 0.31 | 105 |
| | 9 | | 0.05 | 1.6 | 0.34 | 105 |
| Comp. Ex. | 6 | 0 × 10 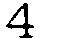 | 0 | 1.0 | 0.19 | 105 |
| | 7 | 4 × 10 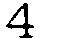 | do. | 0.9 | 0.19 | 105 |

| | | | | | | |
|---|---|---|---|---|---|---|
| *2: content per 100 parts by weight of the base GPPS. | | | | | | |

The base GPPSs employed in these Examples and Comparative Examples were Daicel Styrols #53 and #51 having weight-average molecular weights of 30 × 10 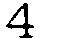 and 24 × 10 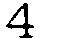 , respectively (each mfd. by Daicel Chemical Industries, Ltd.) and US-300 having a weight-average molecular weight of 45 × 10 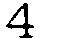 (mfd. by Sumitomo Chemical Co., Ltd.).

### Example 10 and Comparative Example 8: Containers

The materials as listed in Table 3 were melt kneaded and extruded from a T-die into sheets, which were stretched by the tenter method with the use of a twin-screw extruder (mfd. by Iwamoto Seisakusho) at a heating temperature of 125°C for a heating time of 7 min, at a draw ratio of 2.5-fold each in the lengthwise and crosswise directions at a stretching speed of 50 mm/sec to thereby give sheets of 0.25 mm in thickness. The sheets were subjected to the measurement of the haze value and the Du Pont impact strength each in the same manner as the one described in Example 1. The modulins of elasticity was determined in two directions, i.e., the direction of the extrusion of the sheet (MD) and the direction vertical thereto (TD) in accordance with JIS K7127. Further, the folding strength was determined in two directions (MD and TD) by using an MIT type test machine under a load of 1.0 kgf in accordance with JIS P8115.

Next, the biaxially stretched sheet thus obtained was processed into a container (180 × 230 × 13 mm) by the hot plate forming method at a forming temperature of 120°C. The container obtained in Example 10 was nervy, hard and scarcely deformed. On the other hand, the container obtained in Comparative Example 8 was nervy but easily deformed. These containers were subjected to the measurement of the haze value and the buckling strength when left to stand vertically on a flat surface in the same manner as the one described in Example 1. The buckling strength was measured by using a Tensilon universal test machine UCT (mfd. by Orientec Corp.) by reference to JIS K7203. Namely, a flat jig was put on a support and a sample (180 × 230 × 13 mm) was placed thereon with its opening facing downward. Then a load was applied thereto by a pressure wedge falling at a constant speed of 10 mm/min. The maximum load at the point of the deformation of the container was referred to as the buckling strength.

Table 3 summarizes the results.

**Table 3**

| | | Ex. 10 | Ex. 11 |
|---|---|---|---|
| | | Daicel | Daicel |
| Base GPPS | | Styrol #30 | Styrol #30 |
| Wt.-av. mol. wt. of base GPPS | | 240,000 | 240,000 |
| Content (ppm) of aluminum borate whisker | | 300 | 0 |
| Thickness (mm) | | 25 | 0.25 |
| Draw ratio (fold) | | 2.5 | 2.5 |
| Sheet | Modulus of elasticity | | |
| | MD (kg/cm²) | 41,000 | 36,000 |
| | TD (kg/cm²) | 42,000 | 37,000 |
| | Du Pont impact strength (kgf·cm) | 2.6 | 1.6 |
| | MIT | | |
| | MD (time) | 86 | 50 |
| | TD (time) | 19 | 13 |
| | Haze (%) | 0.6 | 0.4 |
| Container | Haze (%) | 1.9 | 1.3 |
| | Buckling strength | 0.85 | 0.61 |

## Claims

1. A styrene resin composition containing 100 parts by weight of a styrene resin and from 0.001 to 4 parts by weight of a fibrous material.

2. The composition as set forth in Claim 1 wherein said fibrous material has a fiber diameter of from 0.05 to 15 µm, a fiber length of from 2 to 100 µm and an aspect ratio of at least 5.

3. The composition as set forth in Claim 1 wherein said fibrous material is whiskers.

4. The composition as set forth in Claim 3 wherein said whiskers are a mixture of whiskers of at least one material selected from among aluminum borate, silicon carbide, silicon nitride, potassium titanate, zinc oxide, basic magnesium sulfate, magnesia, magnesium borate, titanium diboride, graphite (C), calcium sulfate, α-alumina, chrysotile, wollastonite, calcium carbonate, calcium silicate and titanium oxide.

5. A composition containing 100 parts by weight of a styrene resin having a weight-average molecular weight of from 100,000 to 500,000 and from 0.001 to 4 parts by weight of aluminum borate whiskers.

6. The composition as set forth in Claim 5 wherein said whiskers have a fiber diameter of from 0.05 to 15 µm, a fiber length of from 2 to 100 µm and an aspect ratio of at least 5.

7. The composition as set forth in Claim 5 wherein the content of said aluminum borate whiskers is from 0.01 to 1 part by weight.

8. A molded article made from a composition as set forth in any of Claims 1 to 7.

9. The molded article as set forth in Claim 8 which is an injection-molded article.

10. The molded article as set forth in Claim 8 which is an extrusion-molded article.

11. The molded article as set forth in Claim 8 which is a biaxially stretched sheet.

12. A container obtained from a molded article as set forth in Claim 10 or 11.
